# EUROPÄISCHE PATENTSCHRIFT

(11) **EP 2 705 095 B1**
(45) Veröffentlichungstag und Bekanntmachung des Hinweises auf die Patenterteilung: **16.03.2016**
(21) Anmeldenummer: 12713603.4
(22) Anmeldetag: 04.04.2012
(51) Int. Cl.: B32B 27/08, B32B 27/18, H01B 3/40, H02K 3/34, H02K 3/48, H02K 15/04, B32B 21/08, B32B 27/36, C09D 7/12, H01B 3/30

(54) **ISOLATIONSLACK UND ISOLATIONSLAMINAT**
INSULATING VARNISH AND INSULATION LAMINATE
VERNIS ISOLANT ET STRATIFIÉ ISOLANT

(30) Priorität: 02.05.2011 EP 11003554
(43) Veröffentlichungstag der Anmeldung: 12.03.2014
(73) Patentinhaber: ABB AG, 68309 Mannheim (DE)
(72) Erfinder: NELGES, Jörg, 74821 Mosbach (DE)
(86) Internationale Anmeldenummer: PCT/EP2012/001501
(87) Internationale Veröffentlichungsnummer: WO 2012/149991

(56) Entgegenhaltungen:
- DE-A1-102005 050 428
- US-A- 4 861 647
- DATABASE WPI Week 201076 Thomson Scientific, London, GB; AN 2010-N84726 XP002663965, & JP 2010 251134 A (SUMITOMO ELECTRIC WINTEC INC) 4. November 2010 (2010-11-04)
- DATABASE WPI Week 201043 Thomson Scientific, London, GB; AN 2010-G79035 XP002663966, & JP 2010 135135 A (AUTO KAGAKU KOGYO KK) 17. Juni 2010 (2010-06-17)

## Beschreibung

Die Erfindung betrifft einen Isolationslack und ein Isolationslaminat welches eine Basislaminatschicht aufweist.

Es ist allgemein bekannt, dass rotierenden elektrischen Maschinen oder Generatoren zumeist wenigstens ein aus einem Blechpaket gefertigtes Basiselement wie beispielsweise einen Stator aufweisen, in welchem ein bei Betrieb dieser Komponente auftretender magnetischer Fluss geführt wird. Die Ausführung mittels Blechpaketen dient hierbei überwiegend der Vermeidung oder zumindest Reduktion von Wirbelströmen.

Die für derartige Komponenten notwendigen elektrischen Wicklungsleiter, beispielsweise eine Statorwicklung, sind hierbei zumeist in Wicklungsnuten geführt, welche als kanalähnliche Aussparungen durch die jeweiligen Blechpakete gebildet sind. Die Wicklungsnuten sind hierbei üblicherweise an ihren Grenzflächen durch einen flächigen Isolierstoff ausgekleidet, so dass die elektrische Isolation zwischen Wicklung und Blechpaket vorteilhaft gesteigert ist. Als Isolationsmaterialien werden ein- oder mehrlagige flexible Flächenisolationsstoffe (IEC 60626-3) eingesetzt. Diese flexiblen Isolationsstoffe können darüber hinaus mit Beschichtungen zum Verkleben gegen das Blechpaket bzw. mit Beschichtungen zur Erhöhung der Alterungsbeständigkeit (IEC 60626-3 Blatt 502ff) bei höherer Temperatur eingesetzt werden

Bei der Herstellung von derartigen Maschinen oder Generatoren sind daher zunächst das jeweilige Blechpaket beziehungsweise auch weitere Komponenten zu fertigen, wobei anschließend der jeweilige Wicklungsleiter in die Nuten eingezogen wird. Gerade bei kleineren Maschinen, beispielsweise bei Motoren im Leistungsbereich von <1kW bis 10kW und darüber wird ein Wicklungsleiter beim Einbringen in die jeweiligen Wicklungsnuten zumindest teilweise durch diese gezogen.

Nachteilig ist jedoch, dass die bekannten in der Norm beschriebenen Flächenisolationsstoffe eine materialabhängige Oberflächenrauhigkeit aufweisen, die bei automatisierter Verarbeitung einen die Fertigungsgeschwindigkeit begrenzenden Faktor darstellt. Üblicherweise wird bei automatisierter Fertigung zunächst der Nutkasten isoliert und anschließend die Wicklung gemeinsam mit einem Nutverschluss eingezogen. Hierbei reiben einerseits die Wicklung an der Nutkastenisolation und andererseits die Nutkastenisolation am Nutverschluss. In Abhängigkeit des COF (Coefficient of Friction) der Reibpartner kann es zu einer Beschädigung der Isolation kommen, bzw. das Einziehen der Isolation wird verhindert.

*Das Patentdokument* DE 10 2005 050428 A1 offenbart lackierte Kupferdrähte mit kleinem COF, wobei als Epoxidbasislack mit PTFE-Teilchen als Gleitmittel eingesetzt wird. Zudem wird die Verwendung von Fettsäurewachsen als Gleitmittel in Polyamiden offenbart.

Das Patendokument US 4 861 647 A offenbart eine Lackierung für Dosen aus einer hitzeerhärtbaren Beschichtung mit internem Gleitmittel (Wachs aus PE, PP, Paraffin, PTFE). Der Binder ist Phenol u/o Epoxy.

Die Dokumente JP 2010 251934 A und JP 2010 135135 A offenbaren gleitfähige Isolationslacke für elektrische Drähte und Motoren.

Ausgehend von diesem Stand der Technik ist es Aufgabe der Erfindung, einen Flächenisolationsstoff oder Materialien hierfür bereitzustellen, durch welche die zuvor beschriebenen Reibungseffekte reduziert sind.

Diese Aufgabe wird gelöst durch einen Isolationslack der eingangs genannten Art. Dieser ist gekennzeichnet durch einen Hauptanteil an Basislack und einen Zusatz von einem Gleitmittel. Typischerweise sind Flächenisolationsstoffe zumindest einseitig, vorzugsweise aber beidseitig mit einem Basislack beschichtet, welcher der Verbesserung der Alterungsbeständigkeit dient. Dieser Basislack trägt aber auch in einem erheblichen Maß zu der Reibecharakteristik längs der Oberfläche des Flächenisolationsstoffes bei. Durch Zugabe eines Gleitmittels zu dem Basislack ist ein erfindungsgemäßer Isolationslack bereitgestellt, welcher nach Aufbringung auf den Flächenisolationsstoff und seiner Aushärtung, beispielsweise aufgrund seiner Ausgestaltung als Zweikomponentenlack, in vorteilhafter Weise eine verbesserte Reibungscharakteristik ermöglicht.

Entsprechend einer bevorzugten Ausgestaltung des erfindungsgemäßen Isolationslackes ist der Basislack ein Polyesterimid- oder Epoxidlack. Derartige Lacke haben sich für die Beschichtung von Flächenisolationsstoffen auch ohne erfindungsgemäßen Materialzusatz bewährt, wenn auch mit verbesserungsfähigem Reibungsverhalten. Bevorzugter Weise sind derartige Lacke als Zweikomponentenmaterial aufgebaut, also mit einem Stammlack und einem Härter, welche kurz vor deren Applikation miteinander gemischt werden und dann aushärten. Entsprechend einer weiteren Ausgestaltungsform des erfindungsgemäßen Isolationslackes wird als Gleitmittelzusatz eine Amidwachsdispersion mit einem Gewichtsanteil von 2% bis 25% des erfindungsgemäßen Isolationslackes verwendet, wobei der untere Bereich von 2% bis 10% besonders bevorzugt ist. Es hat sich nämlich herausgestellt, dass zur Lösung der erfindungsgemäßen Aufgabe bereits kleinere Mengen des Zusatzes ausreichend sind. Typischerweise ergänzen sich Basislack und Gleitmittelzusatz zu 100%.

Die erfindungsgemäße Aufgabe wird auch gelöst durch ein Isolationslaminat, welches eine Basislaminatschicht aufweist, welche zumindest auf einer ihrer flächigen Seiten mit einer Schicht eines erfindungsgemäßen Isolationslackes überzogen ist. Dieser ist idealerweise ausgehärtet, weil dann die Reibungseigenschaften der Oberfläche des efindungsgemäßen Isolationslaminates am besten ausgeprägt sind.

Das erfindungsgemäße Gleitmittel, bevorzugter Weise eine Amidwachsdispersion, hat nämlich die Eigenschaft, dass es sich bei Raumtemperatur auf der Oberfläche der getrockneten Isolationslackschicht anreichert und bei Temperaturen größer 60°C von der Oberfläche wegmigriert, sich also in das Innere der getrockneten Isolationslackschicht zurückzieht. Dies hat einerseits den Vorteil, dass bei Einbringen eines Wicklungsleiters in die Wicklungsnuten, welche mit einem erfindungsgemäßen Isolationslaminat ausgekleidet sind, eine extrem glatte Oberfläche zur Verfügung gestellt ist, durch welche ein Gleiten beim Einziehen des Wicklungsleiters begünstigt ist. Das Einbringen von Wicklungsleitern erfolgt nämlich erfindungsgemäß bei Raumtemperatur, also in einem Temperaturbereich von etwa 15°C bis 30°C, bevorzugter Weise bei ca. 20°C.

Auf der anderen Seite ist eine derartige Gleitschicht aber von Nachteil für einen üblicherweise danach durchzuführenden Verguss des eingezogenen Wicklungsleiters, sofern dieser ebenfalls bei Raumtemperatur erfolgt. Durch einen Verguss soll die Wicklung beziehungsweise der Wicklungsleiter abschließend stabilisiert werden um eine hohe Robustheit des Endproduktes, beispielsweise des Motors, zu erreichen. Eine derartige Gleitschicht würde dem Ziel eines Vergusses also entgegenwirken, weil eine Haftung der Vergussmasse an dem Wicklungsleiter erheblich reduziert wäre.

Typischerweise erfolgt ein solcher Verguss jedoch nicht unter Raumtemperaturbedingungen, sondern entweder mit einer heißen Vergussmasse oder aber auch unter Erhitzung der betreffenden Komponente auf eine Trocknungstemperatur der Vergussmasse, beispielsweise 110°C. In diesem Fall migriert die Gleitschicht temperaturbedingt in das Innere der Lackschicht und die Vergussmasse kann sich während ihrer Aushärtung kraftschlüssig mit der Wicklung beziehungsweise dem Wicklungsleiter verbinden. Damit ist eine Stabilisierung der Wicklung durch die Vergussmasse in vorteilhafter Weise gewährleistet.

Unter der Voraussetzung, dass eine Vergussmasse gewählt wird, welche bei der Verarbeitung oder zum Aushärten keine erhöhte Temperatur benötigt, ist diese dann entsprechend zu erwärmen. Dies kann entweder direkt erfolgen, oder aber auch indirekt durch Erwärmen der Wicklung, beispielsweise auch durch temporäres Einprägen eines Kurzschlussstromes in die elektrisch betriebsfähige Wicklung.

Es hat sich gezeigt, dass eine mittlere Dicke der Isolationslackschicht im Bereich von 2µm bis 15µm sich als besonders günstig bezüglich der damit erreichten Gleit- beziehungsweise auch Isolationseigenschaften erweist. Im Verhältnis dazu liegen die typischen Schichtdicken einer Basislaminatschicht im Bereich von 90µm bis 800µm. Der untere Schichtdickenbereich der Basislaminatschicht ist durch eine dann zu geringe mechanische Stabilität des Isolationslaminates begrenzt, der obere Schichtdickenbereich durch eine dann zu geringe mechanische Flexibilität des Isolationslaminates, so dass es nicht mehr problemlos in eine Wicklungsnut einzulegen ist.

Entsprechend weiterer bevorzugter Ausführungsformen haben sich folgende Basislaminate, welche bereits ohne erfindungsgemäßen Gleitmittelzusatz für einen vergleichbaren Zweck eingesetzt werden, als besonders geeignet erwiesen, als Basislaminatmaterial für ein erfindungsgemäßes Isolationslaminat verwendet zu werden:
- Pressspan / PET-Folien Laminat,
- PET-Folien / PET-Vlieslaminat,
- NOMEX / PET-Folien Laminat,
- NOMEX / Polymidfolien Laminat.

NOMEX ist eine dem Fachmann gebräuchliche Bezeichnung für Aramidpapier. Derartige Laminate sind typischerweise mehrschichtig und vom Schichtaufbau her symmetrisch, beispielsweise mit 2 oder 3, aber auch mehr Schichten. Bei den oben genannten Kombinationen ist unter anderem eine besonders gute Haftung des erfindungsgemäßen Isolationslackes an der Oberfläche des Basislaminates gegeben. In diesem Zusammenhang sei erwähnt, dass das Basislackmaterial vorzugsweise ein 2-Komponentenmaterial ist, so dass für dessen Aushärtung eine geringere Temperatur notwendig ist und sich die Gleitschicht während der Trocknungsphase des erfindungsgemäßen Isolationslackes an der Oberfläche der Lackschicht anreichert.

Die erfindungsgemäße Aufgabe wird auch gelöst durch ein Verfahren zum Einbringen einer Wicklung in wenigstens eine Wicklungsnut eines Stators oder Läufers, umfassend folgende Schritte:
- Auslegen der wenigstens einen Wicklungsnut mit einem erfindungsgemäßen Isolationslaminat
- Einziehen eines Wicklungsleiters in die wenigstens eine Wicklungsnut unter Raumtemperaturbedingungen
- Verguss des Wicklungsleiters in der wenigstens einen Wicklungsnut unter erhöhter Temperatur.

Die erfindungsgemäßen Vorteile dieses Verfahrens sind bereits im Zusammenhang mit dem erfindungsgemäßen Isolationslaminat erläutert worden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch ein exemplarisches Isolationslaminat und
- Fig. 2: Arbeitsschritte A, B, C beim Einbringen eine Wicklungsleiters.

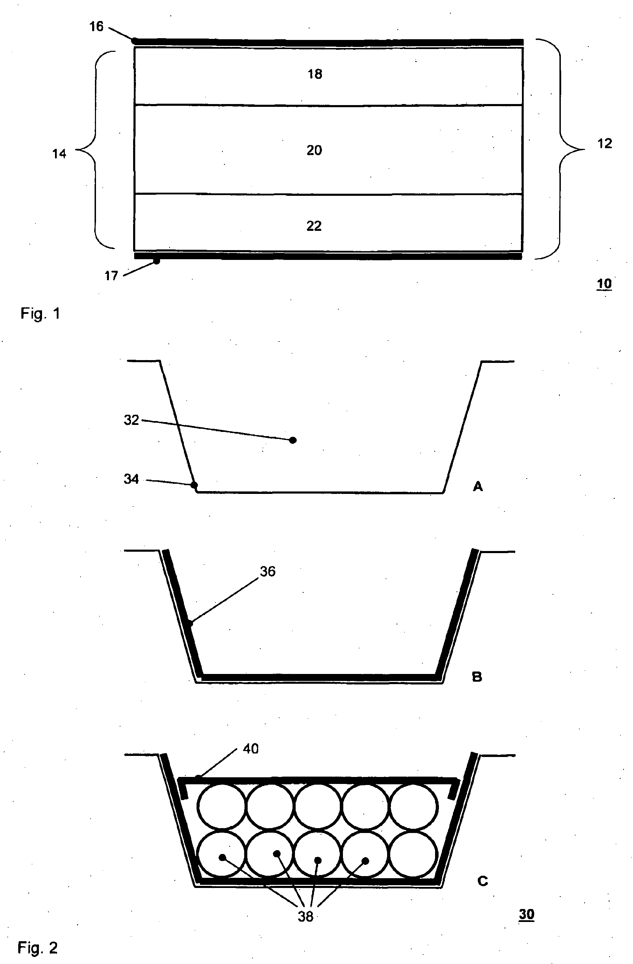

Fig. 1 zeigt einen Schnitt 10 durch ein exemplarisches erfindungsgemäßes Isolationslaminat 12 mit einem dreischichtigen Basislaminat 14 und beidseitiger Beschich-, tung mit einer Isolationslackschicht 16, 17 mit einem Zusatz von Gleitmittel. Die Schichtdicken der Isolationslackschichten 16, 17 betragen in diesem Fall jeweils etwa 5µm. Das Basislaminat umfasst eine mittlere Laminatschicht 20 mit einer Schichtdicke von etwa 200µm aus einem PET-Vlieslaminat. Die beiden äußeren Laminatschichten 18, 22 sind aus einem PET-Vlies gefertigt und weisen eine Schichtdicke von jeweils 50µm auf.

Fig. 2 zeigt exemplarische Arbeitsschritte A, B, C beim Einbringen eine Wicklungsleiters in eine Wicklungsnut in einer Ansicht 30. In der ersten Darstellung 30A ist eine Wicklungsnut 32 gezeigt, welche in einem Blechpaket eines Stators eines Motors eingelassen ist, wie mit deren Grenzflächen 34 angedeutet ist. Je nach Motorgröße und Leistung beträgt die Tiefe der Wicklungsnut beispielsweise 1 cm bis 3cm für Motoren kleinerer Größe, beispielsweise für Bohrmaschinen oder Staubsauger. Die Nutbreite liegt beispielsweise in einem Bereich von 0,5 cm bis 6cm. Selbstverständlich sind aber auch bedeutend größere Motoren oder Generatoren mit entsprechend anderen Nutabmessungen denkbar.

In der Darstellung 30B ist ein in die Wicklungsnut eingelegtes, gefaltetes erfindungsgemäßes Isolationslaminat 36 dargestellt, welches eine Dicke von etwa 200µm aufweist. Bei der in diesem Beispiel angenommenen geringen Motorleistung und damit auch Motorspannung ist dies für die elektrische Isolation von angenommenen maximal 1kV absolut ausreichend.

In der Darstellung 30C ist zusätzlich ein eingelegter Wicklungsdraht 38 angedeutet, wobei der Leiterquerschnitt absolut nicht maßstäblich ist, vielmehr ist mit einer deutlich höheren Anzahl an Windungen des Wicklungsleiters 38 mit einem entsprechend geringerem Querschnitt zu rechnen. Die aus dem Wicklungsleiter 38 gebildete Wicklung erstreckt sich wenigstens noch über eine weitere, symmetrisch gegenüber liegende und nicht gezeigte Wicklungsnut. Die Wicklungsnut beziehungsweise der Nutkasten ist mit einem Nutverschluss 40 aus ebenfalls einem erfindungsgemäßen Isolationslaminat abgedeckt, dieses hat jedoch aus mechanischen Gründen eine etwas erhöhte Schichtdicke. Die Wicklung ist als vergossen anzunehmen, so dass der Nutkasten mit dem darin angeordneten Wicklungsleiter 38 mit einer nicht dargestellten Vergussmasse gefüllt ist, durch welche die Wicklung verfestigt ist.

### Bezugszeichenliste

- 10: Schnitt durch ein exemplarisches Isolationslaminat
- 12: Isolationslaminat
- 14: Basislaminatschicht
- 16: erste Isolationslackschicht
- 17: zweite Isolationslackschicht
- 18: erste Lage des Basislaminates
- 20: zweite Lage des Basislaminates
- 22: dritte Lage des Basislaminates
- 30: Arbeitsschritte A, B, C beim Einbringen eine Wicklungsleiters
- 32: Innenraum einer exemplarischen Wicklungsnut
- 34: Grenzfläche einer exemplarischen Wicklungsnut
- 36: Isolationslaminat
- 38: Wicklungsleiter
- 40: Nutverschluss

## Patentansprüche

1. Isolationslaminat (12, 36), aufweisend eine *elektrisch isolierende* Basislaminatschicht (14), wobei diese zumindest auf einer ihrer flächigen Seiten mit einer Schicht (16, 17) eines Isolationslackes überzogen ist, **dadurch gekennzeichnet, dass** der Isolationslack einen Basislack und einen Zusatz von einem Gleitmittel aufweist.

2. Isolationslaminat nach Anspruch 1, **dadurch gekennzeichnet, dass** der Basislack ein Polyesteremid- oder Epoxidlack ist.

3. Isolationslaminat nach einem der Ansprüche 1 oder 2, **dadurch gekennzeichnet, dass** der Zusatz eine Amidwachsdispersion mit einem Gewichtsanteil von 2% bis 25% ist.

4. Isolationslaminat nach einem der vorherigen Ansprüche, **dadurch gekennzeichnet, dass** die mittlere Dicke des Basislaminates (14) im Bereich von 80µm bis 1000µm liegt.

5. Isolationslaminat nach einem der vorherigen Ansprüche, **dadurch gekennzeichnet, dass** der Isolationslack ausgehärtet ist.

6. Isolationslaminat nach Anspruch 5, **dadurch gekennzeichnet, dass** die mittlere Dicke der Isolationslackschicht (16, 17) im Bereich von 2µm bis 15µm liegt.

7. Isolationslaminat nach einem der vorherigen Ansprüche, **dadurch gekennzeichnet, dass** als Basislaminat (14) ein Pressspan / PET-Folien Laminat verwendet ist.

8. Isolationslaminat nach einem der vorherigen Ansprüche, **dadurch gekennzeichnet, dass** als Basislaminat ein PET-Folien / PET-Vlieslaminat verwendet ist.

9. Isolationslaminat nach einem der vorherigen Ansprüche, **dadurch gekennzeichnet, dass** als Basislaminat (14) ein NOMEX / PET-Folien Laminat verwendet ist.

10. Isolationslaminat nach einem der vorherigen Ansprüche, **dadurch gekennzeichnet, dass** als Basislaminat (14) ein NOMEX / Polymidfolien Laminat verwendet ist.

## Claims

1. Insulation laminate (12, 36), having an electrically insulating base laminate layer (14), this layer being coated at least on one of its flat sides with a layer (16, 17) of an insulating varnish, **characterized in that** the insulating varnish has a basecoat and an added lubricant.

2. Insulation laminate according to Claim 1, **characterized in that** the basecoat is a polyesterimide or epoxy varnish.

3. Insulation laminate according to either of Claims 1 and 2, **characterized in that** the addition is an amide wax dispersion in a proportion by weight of 2% to 25%.

4. Insulation laminate according to one of the preceding claims, **characterized in that** the average thickness of the base laminate (14) lies in the range from 80 µm to 1000 µm.

5. Insulation laminate according to one of the preceding claims, **characterized in that** the insulating varnish is cured.

6. Insulation laminate according to Claim 5, **characterized in that** the average thickness of the insulating varnish layer (16, 17) lies in the range from 2 µm to 15 µm.

7. The insulation laminate according to one of the preceding claims, **characterized in that** a pressboard / PET film laminate is used as the base laminate (14).

8. Insulation laminate according to one of the preceding claims, **characterized in that** a PET film / PET nonwoven laminate is used as the base laminate.

9. Insulation laminate according to one of the preceding claims, **characterized in that** a NOMEX / PET film laminate is used as the base laminate (14).

10. Insulation laminate according to one of the preceding claims, **characterized in that** a NOMEX / polyimide film laminate is used as the base laminate (14).

## Revendications

1. Stratifié isolant (12, 36), comprenant une couche de stratifié de base électriquement isolante (14), celle-ci étant revêtue au moins sur un de ses côtés plats avec une couche (16, 17) d'un vernis isolant, **caractérisé en ce que** le vernis isolant comprend un vernis de base et un ajout d'un lubrifiant.

2. Stratifié isolant selon la revendication 1, **caractérisé en ce que** le vernis de base est un vernis polyester-imide ou époxyde.

3. Stratifié isolant selon l'une quelconque des revendications 1 ou 2, **caractérisé en ce que** l'ajout est une dispersion de cire d'amide en une proportion en poids de 2 % à 25 %.

4. Stratifié isolant selon l'une quelconque des revendications précédentes, **caractérisé en ce que** l'épaisseur moyenne du stratifié de base (14) se situe dans la plage allant de 80 µm à 1 000 µm.

5. Stratifié isolant selon l'une quelconque des revendications précédentes, **caractérisé en ce que** le vernis isolant est durci.

6. Stratifié isolant selon la revendication 5, **caractérisé en ce que** l'épaisseur moyenne de la couche de vernis isolant (16, 17) se situe dans la plage allant de 2 µm à 15 µm.

7. Stratifié isolant selon l'une quelconque des revendications précédentes, **caractérisé en ce qu'**un stratifié aggloméré/feuilles de PET est utilisé en tant que stratifié de base (14).

8. Stratifié isolant selon l'une quelconque des revendications précédentes, **caractérisé en ce qu'**un stratifié feuilles de PET/non-tissés de PET est utilisé en tant que stratifié de base.

9. Stratifié isolant selon l'une quelconque des revendications précédentes, **caractérisé en ce qu'**un stratifié NOMEX/feuilles de PET est utilisé en tant que stratifié de base (14).

10. Stratifié isolant selon l'une quelconque des revendications précédentes, **caractérisé en ce qu'**un stratifié NOMEX/feuilles de polyimide est utilisé en tant que stratifié de base (14).
